# EUROPEAN PATENT APPLICATION

(11) **EP 4 797 493 A1**
(43) Date of publication of application: **26.08.2026**
(21) Application number: 26158041.9
(22) Date of filing: 12.02.2026
(51) Int. Cl.: H02J 7/50, H02J 7/62, H02J 7/00

(54) **BATTERY SYSTEM**

(30) Priority: 25.02.2025 JP 2025028035
(71) Applicant: Prime Planet Energy & Solutions, Inc., Chuo-ku, Tokyo 103-0022 (JP)
(72) Inventor: YANO, Junya, Tokyo, 103-0022 (JP)
(74) Representative: Kuhnen & Wacker Patent- und Rechtsanwaltsbüro PartG mbB

(57) **Abstract**

The battery system 1 includes plural battery modules 10 connected to a load 100 and includes a control device 60. The battery module 10 includes a pre-charge unit 40 having a pre-resistance 41. The control device 60 includes a pre-charge process executing part 67 that executes a pre-charge process on each one battery module 10 of the plural battery modules 10 one by one. The control device 60 further includes a time obtaining part 64 that obtains a cooling time T_{C} being an elapsed time since a previous pre-charge process is performed on a previous hierarchy No. 1 battery module on which the pre-charge process is firstly executed when the previous connection to the load 100 is performed, and includes an order deciding part 65 that decides the order to inhibit the pre-charge process from being executed firstly on the previous hierarchy No. 1 battery module when the cooling time T_{C} is equal to or less than a reference time T_{D}. Accordingly, it is possible to suppress a deviation of the deteriorations of the pre-resistances.

## Description

### BACKGROUND

### 1. Technical Field

A present disclosure relates to a battery system.

### 2. Description of the Related Art

For example, Japanese Patent Application Publication No. 2024-170768 discloses a battery system that is configured for supplying an electric power to a load positioned at an outside. This battery system includes plural battery modules. Then, each of the battery modules includes a pre-charge unit that includes a pre-resistance. Then, this battery system is configured to be capable of executing a pre-charge process in which an electric current is applied through the pre-resistance from each of the battery modules to the load when each of the battery modules is connected to the load. Accordingly, it is possible to suppress an inrush electric current exceeding a rated electric current from being applied to the load.

### SUMMARY

Anyway, regarding the battery system described in Japanese Patent Application Publication No. 2024-170768, there were cases that the pre-resistance of only a specific battery module among the plural battery modules was deteriorated. A herein disclosed technique has an object to suppress a deviation of the deteriorations of the pre-resistances as described above.

A herein disclosed battery system includes a pair of output terminals that are connected to a load, plural battery modules that are connected to the pair of output terminals and arranged in parallel, and a control device. Each of the plural battery modules includes: a battery unit that comprises plural single batteries connected in series; a main relay that is provided on an end part at a first side of the battery unit; an unit relay that is provided on an end part at the second side of the battery unit, and a pre-charge unit that is provided in parallel to the main relay. The pre-charge unit includes: a pre-resistance; and a pre-charge relay that is connected in series to the pre-resistance. The control device comprises a pre-charge process executing part that is configured to control the connection of the plural battery modules to the pair of output terminals after the pre-charge process is executed on each one battery module of the plural battery modules one by one, in a situation where the plural battery modules are connected to the load via the pair of output terminals. The pre-charge process is a process for turning ON the main relay of said one battery module and turning OFF the pre-charge relay when a difference between a main electric voltage having affected between the pair of output terminals and an unit electric voltage of the battery unit of said one battery module is equal to or less than a predetermined threshold after the main relay of said one battery module being a target is turned OFF and the unit relay and the pre-charge relay of said one battery module are turned ON. In addition, the control device of the herein disclosed battery system further includes: a time obtaining part that obtains a cooling time T_{C} being an elapsed time since the pre-charge process is previously performed on a previous hierarchy No. 1 battery module on which the pre-charge process is firstly executed when a previous connection to the load is performed; and an order deciding part that decides an order of the pre-charge process to inhibit the pre-charge process from being executed firstly on the previous hierarchy No. 1 battery module when a next connection to the load is performed in a situation where the cooling time T_{C} is equal to or less than a predetermined reference time T_{D}.

In the conventional battery system, the pre-charge processes are executed in order on the plural battery modules. At that time, in the battery module on which the first pre-charge process of the pre-charge processes is performed (below, which may be referred to as "hierarchy No. 1 battery module", too), a very large electric current is applied to the pre-resistance. Therefore, in the hierarchy No. 1 battery module, the pre-resistance tends to easily heat up at the pre-charge process time. Then, if the pre-charge process is performed again on the previous hierarchy No. 1 battery module without sufficient cooling time, the pre-resistance gets very hot. If the pre-charge processes are repeated without sufficient cooling time as described above, only the hierarchy No. 1 battery module's pre-resistance is preferentially deteriorated. For this matter, the herein disclosed battery system obtains the cooling time T_{C} which is an elapsed time since the previous pre-charge process is performed on the previous hierarchy No. 1 battery module. Then, when this cooling time T_{C} is equal to or less than the reference time T_{D}, it is considered that the pre-resistance of the previous hierarchy No. 1 battery module is not sufficiently cooled down and then the order of the pre-charge processes is decided to make another battery module be the next hierarchy No. 1 battery module. Accordingly, it is possible to inhibit the pre-charge process from being performed on the hot pre-resistance, and thus it is possible to suppress the deviation of the deteriorations of the pre-resistances among the plural battery modules.

### BRIEF DESCRIPTION OF THE DRAWINGS

FIG. 1 is a schematic view that shows a battery system in accordance with an embodiment.
FIG. 2 is a view that is for explaining an elapsed time and a cooling time of a herein disclosed technique.
FIG. 3 is a flowchart that shows a procedure for executing pre-charge processes on a first battery module to a third battery module.
FIG. 4 is a flowchart that shows a detailed procedure of Step S103 in FIG. 3.
FIG. 5 is a timing chart that shows a procedure for executing the pre-charge processes on the first battery module to the third battery module.

### DETAILED DESCRIPTION

Below, one embodiment of a herein disclosed technique would be explained, while referring to drawings. Incidentally, of course, the embodiment explained here is not intended to particularly restrict a present disclosure. Each drawing is a schematic view, and does not always truly reflect an actual implemented product. In addition, the members/parts providing the same effect are suitably provided with the same numerals and signs, and overlapping explanations are suitably omitted.

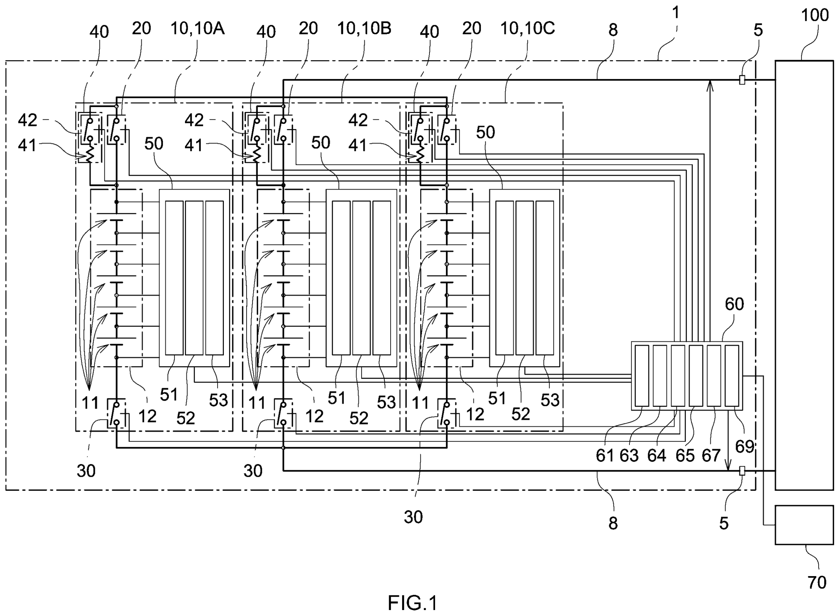

FIG. 1 is a schematic view that shows a battery system 1 in accordance with a present embodiment. As shown in FIG. 1, the battery system 1 is connected to a load 100. The load 100 is not particularly restricted, but may be, for example, a driving device, such as electric motor mounted on a vehicle, or an inverter. To the load 100, a smoothing capacitor may be connected to reduce a drastic change in an electric current. Here, the battery system 1 is, for example, mounted on the vehicle, such as hybrid vehicle and electric vehicle, to be used as a power supply that supplies an electric power to the electric motor configured for driving the vehicle. However, the battery system 1 is not restricted to be for the vehicle.

The battery system 1 includes a pair of output terminals 5, plural battery modules 10, and a control device 60. The pair of output terminals 5 is connected to the load 100. Here, among the pair of output terminals 5, one output terminal 5 is a terminal of a positive electrode and the other one output terminal 5 is a terminal of a negative electrode.

Plural battery modules 10 are connected to the pair of output terminals 5. In the present embodiment, plural battery modules 10 are connected to a main bus 8, and the pair of output terminals 5 is connected to the main bus 8. Thus, the plural battery modules 10 are connected through the main bus 8 to the pair of output terminals 5. In addition, the plural battery modules 10 are indirectly connected to the load 100 through the pair of output terminals 5. The load 100 can convert the electric power of the battery module 10 into a motive power, and supply a regenerative electric power to the battery module 10. The plural battery modules 10 are arranged (in other words, connected) in parallel. Incidentally, a number of the battery modules 10 is not particularly restricted, but is three in the present embodiment. Here, the three battery modules 10 are suitably referred to as a first battery module 10A, a second battery module 10B, and a third battery module 10C. The battery module 10 includes the first battery module 10A, the second battery module 10B, and the third battery module 10C. In an explanation described below, when a common explanation is described about the first battery module 10A to the third battery module 10C, a wording "battery module 10" is used.

In the present embodiment, configurations of the first battery module 10A to the third battery module 10C are the same. One battery module 10 includes plural single batteries 11, a main relay 20, a unit relay 30, a pre-charge unit 40, and a battery control device 50. The single battery 11 is capable of being electrically charged and discharged. As the single battery 11, it is possible, for example, to use a secondary battery capable of being repeatedly charged and discharged by moving a charge carrier between a pair of electrodes (for example, the positive electrode and the negative electrode) through an electrolyte. As the single battery 11, for example, it is possible to use a lithium ion secondary battery, a nickel hydrogen battery, or the like. The plural single batteries 11 are connected in series. Here, the plural single batteries 11 are connected in series via a bus bar not shown in drawings. A number of the single batteries 11 included in one battery module 10 is not particularly restricted, but is a predetermined number. In the present embodiment, the number of single batteries 11 included in one battery module 10 is five. The numbers of the single batteries 11 included in the first battery module 10A to the third battery module 10C are the same, but they may be different. Here, the plural single batteries 11 connected in series are referred to as a battery unit 12. The battery unit 12 includes plural single batteries 11 that are connected in series.

The main relay 20 is connected in series to the plural single batteries 11 (in other words, to the battery unit 12). Here, the main relay 20 is provided on end part at a first side of the battery unit 12. Here, the wording "end part at a first side" represents an end part at the positive electrode side of the battery unit 12 (in other words, plural single batteries 11). However, the end part at the first side may be an end part at the negative electrode side of the battery unit 12. In other words, the main relay 20 may be provided on the end part at the negative electrode side of the battery unit 12. The main relay 20 is a relay that is configured to switch ON and OFF for connection of the end part at the first side of the battery unit 12 and the load 100.

Incidentally, turning the relay ON in the present embodiment represents a connected state (for example, a closed state). Turning the relay OFF represents a not-connected state (for example, an open state).

The unit relay 30 is connected in series to the plural single batteries 11 (in other words, to the battery unit 12). Here, the unit relay 30 is provided on an end part at a second side of the battery unit 12. The wording "end part at a second side" represents an end part being at an opposite side to the end part at the first side of the battery unit 12 (in other words, the plural single batteries 11). Here, the wording "end part at a second side" represents the end part at the negative electrode side of the battery unit 12. However, the end part at the second side may be the end part at the positive electrode side of the battery unit 12. In other words, the unit relay 30 may be provided on the end part at the positive electrode side of the battery unit 12. The unit relay 30 is a relay that switches ON and OFF for connection of the end part at the second side of the battery unit 12 and the load 100.

The pre-charge unit 40 is provided in parallel to the main relay 20. In other words, the pre-charge unit 40 is connected to the main relay 20 in parallel. Here, the pre-charge unit 40 is provided on the end part at the first side (here, the end part at the positive electrode side) of the battery unit 12 (for example, plural single batteries 11 being connected in series). The pre-charge unit 40 is a circuit that suppresses an inrush electric current from being applied to the load 100 when the electric power is supplied from the battery system 1 to the load 100. A configuration of the pre-charge unit 40 is not particularly restricted. Here, the pre-charge unit 40 includes a pre-resistance 41 and a pre-charge relay 42 that is connected to the pre-resistance 41 in series. The pre-charge relay 42 can switch ON and OFF of the connection.

The battery control device 50 is connected to the plural single batteries 11. The battery control device 50 is configured with a circuit board and is provided with a so-called register. The battery control device 50 may be configured, for example, with a microcontroller. The battery control device 50 includes a single battery electric voltage detector 51, an equalizer 52, and a battery unit electric voltage detector 53.

The single battery electric voltage detector 51 detects respective single battery electric voltages of the plural single batteries 11 configuring the battery unit 12. The single battery electric voltage detector 51 is implemented, for example, with a circuit capable of detecting respective electric voltages of the plural single batteries 11. The single battery electric voltage detector 51 may include, for example, plural connection terminals that are connected to the positive electrode and the negative electrode of each single battery 11 configuring the battery unit 12.

The equalizer 52 equalizes remaining capacities of the plural single batteries 11 configuring the battery unit 12, based on the single battery electric voltage of the single battery 11 detected by the single battery electric voltage detector 51. Regarding the equalizer 52, a detailed configuration of it is not particularly restricted, insofar as it can equalize the remaining capacities of the plural single batteries 11. The equalizer 52 is not implemented with a so-called equalization circuit. As the illustration is omitted, the equalizer 52 may be implemented, for example, with plural discharge circuits connected between plural connection terminals which are connected to the positive electrode and the negative electrode of the single battery 11, and with a control circuit. Each of the plural discharge circuits includes a discharge resistance and a switching element. The control circuit is configured to be capable of obtaining each single battery electric voltage of the plural single batteries 11 from the single battery electric voltage detector 51. The control circuit obtains each single battery electric voltage of the plural single batteries 11, for example, via a multiplexer not shown in drawings, from the single battery electric voltage detector 51. Then, the control circuit is configured to be capable of executing a process in which ON and OFF of the switching element is switched on the basis of the obtained single battery electric voltage and then the electrical discharge is suitably performed to make the single battery electric voltage of the single battery 11 whose electric voltage is high match the single battery 11 whose electric voltage is low.

The battery unit electric voltage detector 53 detects a unit electric voltage of the plural single batteries 11 connected in series (in other words, the battery unit 12). The battery unit electric voltage detector 53 is implemented, for example, with a circuit being capable of detecting the unit electric voltage of the battery unit 12. The battery unit electric voltage detector 53 includes plural connection terminals that are connected to the positive electrode and the negative electrode of the plural single batteries 11 configuring the battery unit 12. The battery unit electric voltage detector 53 may detect the unit electric voltage of the battery unit 12, for example, by summing up the single battery electric voltages of the respective single batteries 11 which are detected by the single battery electric voltage detector 51.

The control device 60 is configured, for example, with the microcontroller. The control device 60 includes a communication interface, a central processing unit (CPU) that executes a command of a control program, a ROM (read only memory) that stores the program being executed by the CPU, a RAM (random access memory) that is used as a working area on which the program is expanded, and a storage, such as memory, which stores the program and various data. The control device 60 is electrically connected to the main relays 20, the unit relays 30, the pre-charge relays 42 of the pre-charge units 40, and the battery control devices 50, which are included by the plural battery modules 10 (here, the first battery module 10A to the third battery module 10C). The control device 60 controls switching ON and OFF of the main relay 20, the unit relay 30, and the pre-charge relay 42, for each of the battery modules 10. Regarding the present embodiment, as shown in FIG. 1, a power supply 70 is connected to the control device 60. To the control device 60, the electric power is supplied from the power supply 70.

In the present embodiment, as shown by FIG. 1, the control device 60 includes a main electric voltage obtaining part 61, an unit electric voltage obtaining part 63, a time obtaining part 64, an order deciding part 65, a pre-charge process executing part 67, and a storage part 69. The main electric voltage obtaining part 61, the unit electric voltage obtaining part 63, the order deciding part 65, the pre-charge process executing part 67, and the storage part 69 may be implemented with one or plural processors, or may be implemented with a circuit.

The main electric voltage obtaining part 61 obtains a whole of the main electric voltages of the plural battery modules 10 that are connected in parallel. In other words, the main electric voltage obtaining part 61 obtains the main electric voltage that has acted between the pair of output terminals 5. To explain it further differently, the main electric voltage obtaining part 61 obtains the main electric voltage between the main buses 8. Incidentally, insofar as the main electric voltage can be obtained, a configuration of the main electric voltage obtaining part 61 is not particularly restricted. For example, the main electric voltage obtaining part 61 may be implemented with a circuit being capable of detecting the main electric voltage between the pair of output terminals 5. On the main electric voltage obtaining part 61, for example, a connection terminal may be provided which is connected to the main bus 8 at the positive electrode side and the main bus 8 at the negative electrode side (or, to the pair of output terminals 5).

The unit electric voltage obtaining part 63 obtains, for each of the plural battery modules 10, the unit electric voltage that is the electric voltage of the battery unit 12. Here, the unit electric voltage obtaining part 63 obtains the unit electric voltages of the first battery module 10A to third battery module 10C. In the present embodiment, the unit electric voltage obtaining part 63 obtains the unit electric voltage from the battery unit electric voltage detector 53 of the battery control device 50 of each battery module 10. Here, the battery unit electric voltage detector 53 detects the unit electric voltage of the battery unit 12 and then sends the detected unit electric voltage to the control device 60. The unit electric voltage obtaining part 63 obtains the unit electric voltage by receiving the unit electric voltage sent from the battery unit electric voltage detector 53.

In a situation where the plural battery modules 10 are connected to the load 100 via the pair of output terminals 5, the pre-charge process executing part 67 executes the pre-charge process on each of the plural battery modules 10. The pre-charge process executing part 67 executes the pre-charge process on each of the battery modules 10 of the plural battery modules 10 one by one. In the present embodiment, the pre-charge process executing part 67 independently executes the pre-charge processes on the first battery module 10A, the second battery module 10B, and the third battery module 10C. For example, the pre-charge process executing part 67 executes the pre-charge process on the first battery module 10A, and then the pre-charge process executing part 67 executes the pre-charge process on the second battery module 10B after the pre-charge process executed on the first battery module 10A is ended. Then, after the pre-charge process executed on the second battery module 10B is ended, the pre-charge process executing part 67 executes the pre-charge process on the third battery module 10C.

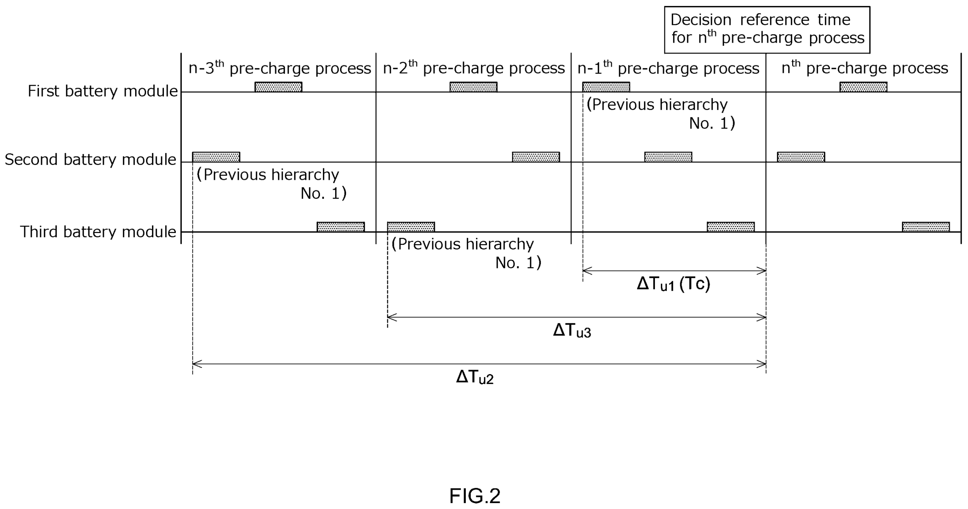

Here, the pre-charge process is a process for suppressing the inrush electric current from being applied to the load 100, in a situation where the battery unit 12 of the battery module 10 is connected to the load 100 via the pair of output terminals 5, by performing a control to apply the electric current to the pre-charge unit 40. In the pre-charge process, by actively applying the electric current to the pre-charge unit 40 without applying the electric current to the main relay 20, it is possible to suppress the inrush electric current from being applied to the load 100. In the present embodiment, the pre-charge process is a process for turning ON the main relay 20 of one battery module 10 and turning OFF the pre-charge relay 42, when the main relay 20 is turned OFF and the unit relay 30 and the pre-charge relay 42 are turned ON for the target battery module 10 and then a difference, between the main electric voltage having acted between the pair of output terminals 5 and the unit electric voltage of the battery unit 12 of one battery module 10, is equal to or less than a predetermined threshold Vₜₕ (see FIG. 2). Here, the pre-charge process is to turn ON the unit relay 30 in a state where the main relay 20, the unit relay 30, and the pre-charge relay 42 are OFF, then turn ON the pre-charge relay 42, then turn ON the main relay 20 after the difference between the main electric voltage and the unit electric voltage becomes equal to or less than a threshold Vₜₕ, and then turn OFF the pre-charge relay 42

The time obtaining part 64 obtains a cooling time T_{C} that is an elapsed time ΔT since the previous pre-charge process of the previous hierarchy No. 1 battery module 10, on which the pre-charge process has been firstly executed when the previous connection to the load has been performed, is performed. Below, the elapsed time ΔT and the cooling time T_{C} in the present specification would be described. FIG. 2 is a view that is for explaining the elapsed time and the cooling time of the herein disclosed technique. At first, the wording "elapsed time ΔT" in the present specification means a time since the latest first pre-charge process is executed. Particularly, regarding an example shown in FIG. 2, the first battery module 10A is set to be hierarchy No. 1 when an n-1^{th} pre-charge process is executed. In that situation, the elapsed time ΔTᵤ₁ of the first battery module 10A is a time since the n-1^{th} pre-charge process is started till an n^{th} pre-charge process is started. In addition, the second battery module 10B is set to be hierarchy No. 1 when an n-3^{th} pre-charge process is executed. In that situation, the elapsed time ΔTᵤ₂ of the second battery module 10B is a time since the n-3^{th} pre-charge process is started till the n^{th} pre-charge process is executed. Then, the third battery module 10C is set to be hierarchy No. 1 when an n-2^{th} pre-charge process is executed. In that situation, the elapsed time ΔTᵤ₃ of the third battery module 10C is a time since the n-2^{th} pre-charge process is executed till the n^{th} pre-charge process is executed. Then, regarding an example shown in FIG. 2, the first battery module 10A is "previous hierarchy No. 1 battery module" on which the previous (n-1^{th}) pre-charge process is executed. In that situation, the time obtaining part 64 treats the elapsed time ΔTᵤ₁ of the first battery module 10A as "cooling time T_{C}". Then, the time obtaining part 64 sends the elapsed time ΔTᵤ₁ of the first battery module 10A to the order deciding part 65 as "cooling time T_{C}". Additionally, in the present embodiment, the elapsed times ΔTᵤ₂ and ΔTᵤ₃ of the other battery modules 10 are sent to the order deciding part 65.

The order deciding part 65 decides the order in which the pre-charge processes are executed on the plural battery modules 10. Here, the order deciding part 65 in the present embodiment decides the order of the pre-charge processes so as to avoid the pre-charge process from being executed firstly on the previous hierarchy No. 1 battery module when the next connection to the load 100 is performed in a situation where the cooling time T_{C} is equal to or less than the predetermined reference time T_{D}. Accordingly, it is possible to inhibit the pre-charge process from being repeatedly executed on the battery module (here, the first battery module 10A) whose pre-resistance 41 is not sufficiently cooled down, and thus it is possible to suppress the deterioration of the pre-resistances 41 in the plural battery modules 10 from being deviated.

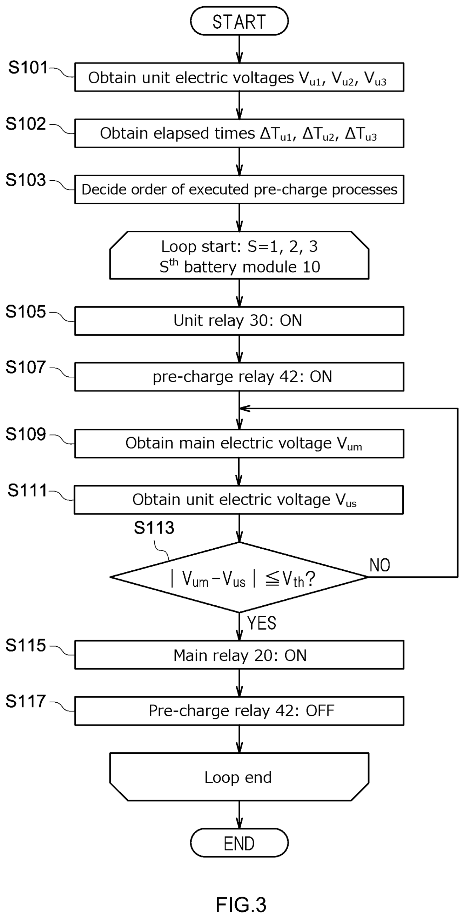

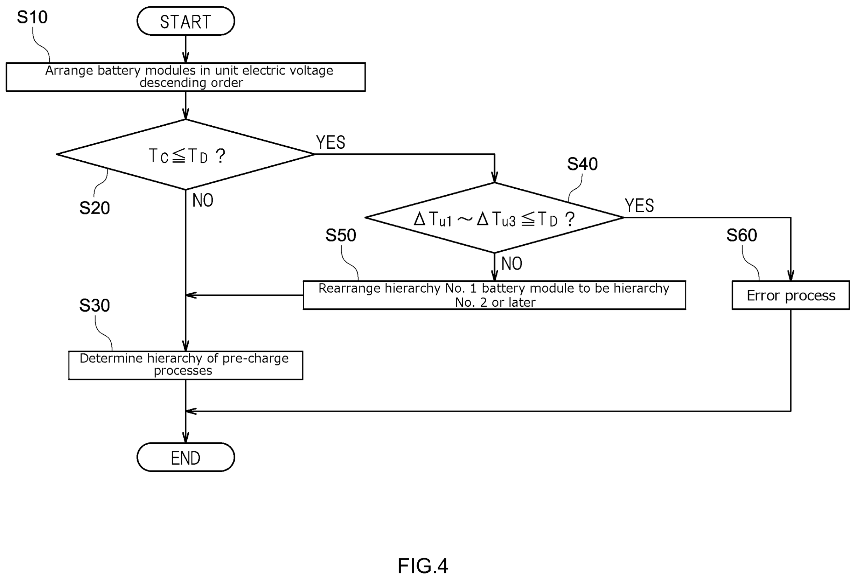

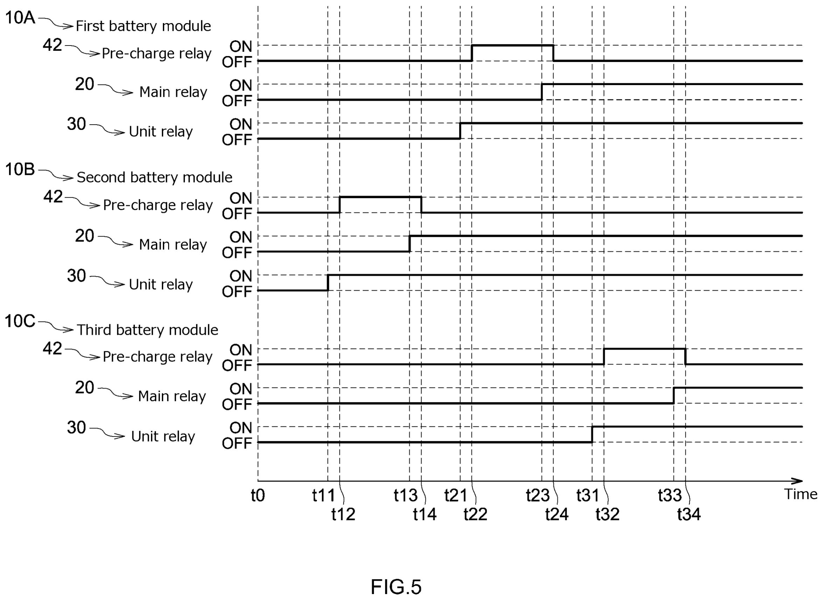

Below, a detailed control performed by the order deciding part 65 would be described. FIG. 3 is a flowchart that shows a procedure for executing pre-charge processes on the first battery module to the third battery module. FIG. 4 is a flowchart that shows a detailed procedure of Step S103 in FIG. 3. FIG. 5 is a timing chart that shows a procedure for executing the pre-charge processes on the first battery module to the third battery module. Here, before the flowchart of FIG. 3 is started, the main relay 20, the unit relay 30, and the pre-charge relay 42 are in the OFF state, regarding the first battery module 10A to the third battery module 10C, as shown at time t0 in FIG. 5.

Firstly, at Step S101 of FIG. 3, the unit electric voltage obtaining part 63 of FIG. 1 obtains the unit electric voltage Vᵤ₁ of the first battery module 10A, the unit electric voltage Vᵤ₂ of the second battery module 10B, and the unit electric voltage Vᵤ₃ of the third battery module 10C. Here, the unit electric voltage obtaining part 63 obtains the unit electric voltages Vᵤ₁, Vᵤ₂, Vᵤ₃ from respective battery unit electric voltage detectors 53 of the first battery module 10A to the third battery module 10C. Incidentally, the unit electric voltages Vᵤ₁, Vᵤ₂, Vᵤ₃ obtained by the unit electric voltage obtaining part 63 are stored in the storage part 69 (see FIG. 1).

Next, at Step S102, the time obtaining part 64 obtains the cooling time T_{C} of the previous hierarchy No. 1 battery module. Particularly, the time obtaining part 64 in the present embodiment obtains the elapsed times ΔTᵤ₁ to ΔTᵤ₃ since the latest pre-charge process is firstly executed, respectively for the plural battery modules 10A to 10C. Then, the time obtaining part 64 treats the battery module 10, whose elapsed time ΔTᵤ₁ to ΔTᵤ₃ is the shortest, as the previous hierarchy No. 1 battery module, and treats the elapsed time of this battery module as the cooling time Tc. A measurement procedure for this elapsed time ΔTᵤ₁ to ΔTᵤ₃ and this cooling time T_{C} has been already explained, and thus overlapping explanations are omitted. Incidentally, below, an example is explained in which the first battery module 10A is the previous hierarchy No. 1 battery module (see FIG. 2).

Next, at Step S103 of FIG. 3, the order deciding part 65 of FIG. 1 decides the order of the pre-charge processes being executed for the first battery module 10A to the third battery module 10C. Regarding the battery system 1 in accordance with the present embodiment, the order of the pre-charge process being executed is decided according to the procedure shown in FIG. 4.

Firstly, as shown at Step S10 in FIG. 4, the order deciding part 65 arranges the plural battery modules 10A to 10C in descending order based on the unit electric voltages Vᵤ₁, Vᵤ₂, Vᵤ₃ obtained at Step S101. For example, in the present embodiment, it assumes that their values become smaller in order of the unit electric voltages Vᵤ₁, Vᵤ₂, Vᵤ₃. In that assumed situation, as a candidate of the execution order of the next (n^{th}) pre-charge process, an execution order, the first battery module 10A, the second battery module 10B, and then the third battery module 10C, is set.

Next, at Step S20, the order deciding part 65 determines whether the cooling time T_{C} (in other words, the elapsed time ΔTᵤ₁ of the first battery module 10A) is equal to or less than the reference time T_{D} or not. Here, when the cooling time T_{C} is more than the reference time T_{D} (No, at Step S20), it is understood that the pre-resistance 41 of the previous hierarchy No. 1 battery module (the first battery module 10A) is sufficiently cooled down. Thus, the order deciding part 65 proceeds to Step S30, without changing the execution order that has been set on the basis of the unit electric voltages Vᵤ₁, Vᵤ₂, Vᵤ₃. Then, at Step S30, the processing is proceeded to Step S105 of FIG. 3 after the execution order of the pre-charge process is determined.

On the other hand, when the cooling time T_{C} is equal to or less than the reference time T_{D} (Yes, at Step S20), it is decided that the pre-resistance 41 of the previous hierarchy No. 1 battery module is still too hot. In that situation, the order of the pre-charge processes is changed at the next (n^{th}) pre-charge process to prevent the pre-charge process from being executed firstly on the previous hierarchy No. 1 battery module.

In particular, the order deciding part 65 determines whether all of the elapsed times ΔTᵤ₁ to ΔTᵤ₃ for the plural battery modules 10A to 10C are equal to or less than the reference time T_{D} or not (Step S40). Then, when at least one of the elapsed times ΔTᵤ₁ to ΔTᵤ₃ for the plural battery modules 10A to 10C is more than the reference time T_{D} (No, at Step S40), it is understood that there is the battery module 10 whose pre-resistance 41 is sufficiently cooled down. In that situation, the order deciding part 65 proceeds to Step S50 of FIG. 4, so as to make the order of the pre-charge process executed on the previous hierarchy No. 1 battery module (the first battery module 10A) become hierarchy No. 2 or later, at the time when the next connection to the load 100 is performed. For example, regarding the example shown in FIG. 2, the order deciding part 65 changes the hierarchy of the first battery module 10A for the next (n^{th}) pre-charge process to the hierarchy No. 2. Then, it makes the second battery module 10B, whose elapsed time ΔTᵤ₂ has been more than the reference time T_{D}, be the hierarchy No. 1. After this change in the order is performed, the order deciding part 65 proceeds the processing to Step S30 so as to determine the execution order, and then proceeds the processing to Step S105 of FIG. 3. Accordingly, it is possible to inhibit the earliest pre-charge process, which tends to easily cause the heat up of the pre-resistance 41 by the inrush electric current, from being executed on the first battery module 10A whose pre-resistance 41 has not been sufficiently cooled down.

In addition, at Step S40, when all of the elapsed times ΔTᵤ₁ to ΔTᵤ₃ for the plural battery modules 10A to 10C are equal to or less than the reference time T_{D} (Yes, Step S40), it is understood that none of the pre-resistances 41 of battery modules 10A to 10C are sufficiently cooled down. In that situation, the control device 60 performs an error process that is previously determined (Step S60). As the error process, for example, the battery system 1 in accordance with the present embodiment performs a process that prohibits each of the main relay 20, the unit relay 30, and the pre-charge relay 42 from being turned ON. Accordingly, it is possible to inhibit all of the pre-resistances 41 from being subjected to the pre-charge process in the state of being hot, and therefore it is possible to further suitably suppress the heat deterioration of the pre-resistances 41.

As described above, after the execution order of the pre-charge processes is decided at Step S103 of FIG. 3, the control device 60 sequentially executes Step S105 to Step S117 according to this execution order. For example, regarding the example shown in FIG. 2, the order deciding part 65 has decided the execution order, i.e., the second battery module 10B, the first battery module 10A, and then third battery module 10C. In that situation, the n^{th} pre-charge process is performed according to the below described procedure.

Firstly, at the n^{th} pre-charge process, Step S105 to Step S117 of FIG. 3 are sequentially executed on the hierarchy No. 1 second battery module 10B. Firstly, at Step S105, the pre-charge process executing part 67 turns ON the unit relay 30 of the second battery module 10B. Next, at Step S107, the pre-charge relay 42 of the second battery module 10B is turned ON. In FIG. 5, regarding the second battery module 10B, the unit relay 30 is turned ON at time t11 and the pre-charge relay 42 is turned ON at time t12. Incidentally, the processed order of Step S105 and Step S107 may be reverse, or the unit relay 30 may be turned ON after the pre-charge relay 42 is turned ON. At time t12, the unit relay 30 and the pre-charge relay 42 have been turned ON, and thus the main electric voltage Vᵤₘ having affected between the pair of output terminals 5 gradually becomes higher by the electric current flowing into the pre-charge unit 40.

After that, at Step S109, the main electric voltage obtaining part 61 obtains the main electric voltage Vᵤₘ. In addition, at Step S111, the unit electric voltage obtaining part 63 obtains the unit electric voltage Vᵤ₂ of the second battery module 10B. Then, at Step S113 of FIG. 3, the pre-charge process executing part 67 of FIG. 1 determines whether a difference (|Vᵤₘ-Vᵤ₂|) between the main electric voltage Vᵤₘ and the unit electric voltage V_{uS} (Here, Vᵤ₂) is equal to or less than the threshold Vₜₕ or not. Here, when the difference between the main electric voltage Vᵤₘ and the unit electric voltage Vᵤ₂ is larger than the threshold Vₜₕ, it goes back to Step S109. On the other hand, when the difference between the main electric voltage Vᵤₘ and the unit electric voltage Vᵤ₂ is equal to or less than the threshold Vₜₕ, it proceeds to Step S115.

At Step S115, the pre-charge process executing part 67 turns ON the main relay 20 of the second battery module 10B. In addition, the pre-charge process executing part 67 turns OFF the pre-charge relay 42 at Step S117. In FIG. 5, regarding the second battery module 10B, the main relay 20 is turned ON at time t13, and the pre-charge relay 42 is turned OFF at time t14. Here, the pre-charge process on the second battery module 10B is executed during a period from time t11 to time t14.

As described above, the pre-charge process is executed on the hierarchy No. 1 second battery module 10B and then Step S105 to Step S117 of FIG. 3 are sequentially executed on the hierarchy No. 2 first battery module 10A, so that the pre-charge process is performed. Here, the pre-charge process executing part 67 executes the pre-charge process on the first battery module 10A after the pre-charge process executed on the second battery module 10B is ended (after time t14 of FIG. 5). At that time, the pre-charge relay 42 of the hierarchy No. 1 second battery module 10B is OFF, and the main relay 20 and the unit relay 30 are in ON state. In that state, the pre-charge process on the first battery module 10A is executed. Incidentally, each of the processes executed at Step S105 to Step S117 on the first battery module 10A is substantially the same as one executed on the second battery module 10B, and thus the explanation of it is omitted. In FIG. 5, regarding the first battery module 10A, the unit relay 30 is tuned ON at time t21 after the time t14, and the pre-charge relay 42 is turned ON at time t22. Then, during a period from time t22 to time t23, the pre-charge process on the first battery module 10A is performed. And then, the main relay 20 is turned ON at the time t23 when the difference between the main electric voltage Vᵤₘ and the unit electric voltage Vᵤ₁ becomes equal to or less than the threshold Vₜₕ, and the pre-charge relay 42 is turned OFF at time t24. Here, the pre-charge process on the first battery module 10A is executed during a period from the time t21 to the time t24.

The pre-charge process is performed by sequentially executing Step S105 to Step S117 on a hierarchy No. 3 third battery module 10C, after the pre-charge processes are executed on the hierarchy No. 1 second battery module 10B and the hierarchy No. 2 first battery module 10A. Here, under a state where both pre-charge relays 42 of the first battery module 10A and the second battery module 10B are OFF and the main relay 20 and the unit relay 30 are ON, the pre-charge process on the third battery module 10C is executed. Incidentally, each of the processes executed on the third battery module 10C at Step S105 to Step S117 are substantially the same as ones for the second battery module 10B and the first battery module 10A, and the explanation of it is omitted here. In FIG. 5, regarding the third battery module 10C, the unit relay 30 is turned ON at the time t31 after the time t24, and the pre-charge relay 42 is turned ON at time t32. Then, during a period from time t32 to time t33, the pre-charge process on the third battery module 10C is performed. And then, the main relay 20 is turned ON at the time t33 when the difference between the main electric voltage Vᵤₘ and the unit electric voltage Vᵤ₃ becomes equal to or less than the threshold Vₜₕ, and the pre-charge relay 42 is turned OFF at time t34. Here, the pre-charge process on the third battery module 10C is executed during a period from the time t31 to the time t34. As described above, the pre-charge process executing part 67 independently executes the pre-charge processes on respective battery modules 10A to 10C in accordance with the execution order decided by the order deciding part 65. After these pre-charge processes are executed, each of the battery modules 10A to 10C is connected to the load 100. Accordingly, it is possible to inhibit the inrush electric current from being applied to the load 100.

While described above, regarding the present embodiment, as shown in FIG. 1, the battery system 1 includes the pair of output terminals 5 connected to the load 100, the plural battery modules 10 connected to the pair of output terminals 5 and arranged in parallel, and the control device 60. Each of the plural battery modules 10 includes the battery unit 12 including the plural single batteries 11 being connected in series, the main relay 20 being provided on the end part at the first side of the battery unit 12 (here, on the end part at the positive electrode side), the unit relay 30 being provided on the end part at the second side of the battery unit 12 (here, the end part at the negative electrode side), and the pre-charge unit 40 being provided in parallel to the main relay 20. The pre-charge unit 40 includes the pre-resistance 41 and the pre-charge relay 42 that is connected to the pre-resistance 41 in series. The control device 60 includes the pre-charge process executing part 67 that controls to connect the plural battery modules 10 to the pair of output terminals 5, in a situation where the plural battery modules 10 are connected to the load 100 via the pair of output terminals 5, after the pre-charge process is executed on each one battery module 10 of the plural battery modules 10 one by one. The pre-charge process is a process for making one battery module 10 have the main relay 20 being turned ON and have the pre-charge relay 42 being turned OFF, in a situation where the difference between the main electric voltage, having affected between the pair of output terminals 5, and the unit electric voltage of the battery unit 12 of one battery module 10 is equal to or less than the predetermined threshold Vₜₕ (see FIG. 2) after the targeted one battery module 10 is made to have the main relay 20 being turned OFF and to have the unit relay 30 and the pre-charge relay 42 being turned ON. In addition, the control device 60 of this battery system 1 further includes the time obtaining part 64 that obtains the cooling time T_{C} being the elapsed time ΔT_{U1} since the previous pre-charge process of the previous hierarchy No. 1 battery module (the first battery module 10A in FIG. 2) on which the pre-charge process has been firstly executed when the previous connection to the load 100 is performed, and further includes the order deciding part 65 that decides the order of the pre-charge processes to inhibit the pre-charge process from being executed firstly on the previous hierarchy No. 1 battery module (the first battery module 10A) when the next connection to the load 100 is performed in a situation where the cooling time T_{C} is equal to or less than the predetermined reference time T_{D}.

In a general battery system, because a very large electric current is applied to the pre-resistance of the hierarchy No. 1 battery module, the pre-resistance tends to easily heat up. Then, if the pre-charge process is performed again without a sufficient cooling time, the pre-resistance becomes very hot, and thus the deterioration of the pre-resistance is accelerated. On this matter, the battery system 1 in accordance with the present embodiment obtains the elapsed time ΔTᵤ₁ since the pre-charge process of the previous hierarchy No. 1 battery module (the first battery module 10A in FIG. 2) is performed, as the cooling time T_{C}. And then, when the cooling time T_{C} is equal to or less than the reference time T_{D}, it decides that the pre-resistance 41 of the previous hierarchy No. 1 battery module 10A is hot and then decides the order of the pre-charge processes so as to make the other battery modules 10B, 10C become the next hierarchy No. 1. Accordingly, it is possible to inhibit the pre-charge process from being repeatedly performed on the hot pre-resistance 41, and thus it is possible to suppress the deviation in the deterioration of the pre-resistances 41 of the plural battery modules 10A to 10C.

Incidentally, the battery system 1 in accordance with the present embodiment decides the order of the pre-charge processes based on the elapsed times ΔT_{U1} to ΔT_{U3} without measuring the temperature of the pre-resistance 41. Accordingly, it is possible to implement an advantage described below. At first, in order to measure the temperature of the pre-resistance 41, it is necessary to attach a temperature sensor onto the battery module 10. In that situation, it is required to provide so many temperature sensors, the number of the temperature sensors to be provided is the same as the number of the battery modules 10, and thus it may cause an increase in a parts cost. On this matter, the elapsed times ΔT_{U1} to ΔT_{U3} can be measured only by setting a timer in the control device 60. In addition, regarding the temperature measurement with the temperature sensor, a delay due to a heat conduction from the pre-resistance 41 to the temperature sensor is caused, and thus it is difficult to implement a control in which the temperature at the inside of the pre-resistance 41 is accurately reflected. On this matter, the heat generation amount of the pre-resistance 41 due to the pre-charge process can be calculated, and thus also, the time required for sufficiently cooling down the pre-resistance (the reference time T_{D}) can be easily calculated. Therefore, the control based on the elapsed times ΔT_{U1} to ΔT_{U3} can implement a more precise timing control, in comparison with the control based on the detection result of the temperature sensor.

In addition, the control device 60 of the present embodiment includes the unit electric voltage obtaining part 63 that obtains the unit electric voltages Vᵤ₁ to Vᵤ₃ being the electric voltages of the battery units 12 for the plural battery modules 10A to 10C. Then, the order deciding part 65 arranges the plural battery modules 10A to 10C in descending order based on the plural unit electric voltages Vᵤ₁ to Vᵤ₃ obtained by the unit electric voltage obtaining part 63. And then, in a situation where the first battery module in this arranged order is the previous hierarchy No. 1 battery module and additionally the cooling time T_{C} is equal to or less than the reference time T_{D}, the order deciding part 65 brings a battery module different from the previous hierarchy No. 1 battery module up to the battery module 10 on which the pre-charge process is firstly executed when the next connection to the load 100 is performed. At first, by sequentially executing the pre-charge processes on the plural battery modules 10 in the order that is to arrange the unit electric voltages in descending order, it is possible to decrease the potential difference between the main electric voltage and the unit electric voltage for the plural battery modules 10. Therefore, it is possible to suppress an excessive electric current that could be generated by the pre-charge process. On top of that, when the previous hierarchy No. 1 battery module is not sufficiently cooled down, the order of the pre-charge processes is changed. Accordingly, it is possible to further suitably suppress the deterioration of the pre-resistance 41.

In addition, the time obtaining part 64 in the present embodiment obtains the elapsed times ΔTᵤ₁ to ΔTᵤ₃ since the latest pre-charge process is firstly executed, respectively for plural battery modules 10A to 10C. And then, the control device 60 executes the predetermined error process when all of the elapsed times ΔTᵤ₁ to ΔTᵤ₃ for the plural battery modules 10A to 10C are equal to or less than the reference time T_{D}. Accordingly, it is possible to suitably suppress the deteriorations of the battery modules other than the previous hierarchy No. 1 battery module. Incidentally, the error process in the present embodiment is a process for prohibiting each of the main relay 20, the unit relay 30, and the pre-charge relay 42 from being turned ON. Accordingly, when all of the pre-resistances 41 are hot, it is possible to inhibit the pre-charge process from being executed. As this result, it is possible to further surely suppress the heat deterioration of the pre-resistance 41.

Above, one embodiment of the herein disclosed battery system has been explained. However, the above described embodiment is not intended to restrict the herein disclosed technique, and thus can be variously changed.

For example, the error process of the above described embodiment prohibits each of the main relay 20, the unit relay 30, and the pre-charge relay 42 from being turned ON. However, a particular content of the error process is not restricted to the above described embodiment, and can be suitably changed according to a configuration, an object, or the like, of the battery system 1. For example, the error process may be a process that prohibits a start of the pre-charge process until the elapsed time of the battery module, whose elapsed time ΔTᵤ₁ to ΔTᵤ₃ is longest among the plural battery modules 10A to 10C (the elapsed time ΔTᵤ₂ of the second battery module 10B in FIG. 2), exceeds the reference time T_{D}. In that situation, a little delay is caused on the start of the pre-charge process, it is possible to further suitably suppress the heat deterioration of the pre-resistances 41 of the battery modules other than the previous hierarchy No. 1 battery module.

In addition, the error process may decide the order of the pre-charge processes so as to perform the pre-charge process firstly on the battery module whose elapsed time ΔTᵤ₁ to ΔTᵤ₃ is longest among the plural battery modules 10A to 10C (the second battery module 10B in FIG. 2). In other words, regarding this error process, when none of the elapsed times ΔTᵤ₁ to ΔTᵤ₃ exceeds the reference time T_{D}, the pre-charge process is started firstly on the battery module 10 that has been cooled down the best. When the error process described above is set, it is possible to decrease the deterioration of the pre-resistance 41 as much as possible, while the pre-charge process is started without the delay. Incidentally, the control device 60 may store all of the above described plural error processes. In that situation, it is preferable that the control device 60 is configured to allow the user to select a proper error process among the plural error processes.

In addition, the above described embodiment, firstly, the order of the pre-charge processes is set on the basis of the unit electric voltages Vᵤ₁ to Vᵤ₃. And then, based on the elapsed time ΔTᵤ₁ (the cooling time T_{C}) of the previous hierarchy No. 1 battery module 10A, the order of the pre-charge processes is changed so as to inhibit the pre-charge process from being executed firstly on the battery module 10 whose pre-resistance 41 is hot. However, the order of the pre-charge processes may be decided on the basis of only the elapsed times ΔTᵤ₁ to ΔTᵤ₃, without consideration of the unit electric voltages Vᵤ₁ to Vᵤ₃ of the battery modules 10A to 10C. In short, the order deciding part 65 can decide the order from the second onwards for the pre-charge processes, on the basis of the elapsed times ΔTᵤ₁ to ΔTᵤ₃ of the plural battery modules 10A to 10C. For example, as shown in FIG. 2, when the elapsed times ΔTᵤ₁ to ΔTᵤ₃ are longer in an order, the second battery module 10B, the third battery module 10C, and the first battery module 10A, the pre-charge processes may be performed according to this order. Accordingly, it is possible to further efficiently cool down each of the plural battery modules 10A to 10C.

In addition, the above described embodiment obtains the respective elapsed times ΔTᵤ₁ to ΔTᵤ₃ of the plural battery modules 10A to 10C. And then, among them, the battery module 10 whose elapsed time is the shortest (the first battery module 10 of FIG. 2) is treated as "previous hierarchy No. 1 battery module", and the elapsed time of this previous hierarchy No. 1 battery module (the elapsed time ΔTᵤ₁ of the first battery module 10) is treated as "cooling time T_{C}". However, the "cooling time T_{C}" can be measured with obtaining none of the elapsed times ΔTᵤ₁ to ΔTᵤ₃ of the plural battery modules 10A to 10C. For example, in a situation where a history of the hierarchy No. 1 battery modules up until now is stored by the storage part 69 of the control device 60, it is possible to decide the previous hierarchy No. 1 battery module even if none of the elapsed times of all battery modules is measured. Then, by measuring the elapsed time of the previous hierarchy No. 1 battery module decided on the basis of this history, it is possible to selectively measure only the cooling time T_{C}.

Additionally, regarding the above described embodiment, as shown in Step S10 of FIG. 4, the plural battery modules 10A to 10C are arranged in the descending order based on the unit electric voltages Vᵤ₁, Vᵤ₂, Vᵤ₃ obtained at Step S101. However, the order in which the plural battery modules are arranged on the basis of the unit electric voltages is not restricted to the descending order, and may be an ascending order. Even if the pre-charge processes are sequentially executed while the unit electric voltages are arranged in the ascending order, it is possible to decrease an electric potential difference between the main electric voltage and the unit electric voltage among the plural battery modules 10. As this result, it is possible to suppress the excessive electric current that can be generated by the pre-charge process.

Above, the herein described disclosure is variously explained. Unless specifically mentioned, the embodiment illustrated herein is not to restrict the present disclosure. In addition, the embodiment of the herein described disclosure can be variously changed, each configuration element and each process described herein can be suitably omitted, or suitably combined, insofar as there are no special issues.

As described above, the present specification contains disclosures that are recited in respective items described below.

### Item 1:

A battery system, comprising:
a pair of output terminals that are connected to a load;
plural battery modules that are connected to the pair of output terminals and arranged in parallel; and
a control device, wherein
each of the plural battery modules comprises:
   a battery unit that comprises plural single batteries connected in series;
   a main relay that is provided on an end part at a first side of the battery unit;
   an unit relay that is provided on an end part at a second side of the battery unit; and
   a pre-charge unit that is provided in parallel to the main relay,
the pre-charge unit comprises:
   a pre-resistance; and
   a pre-charge relay that is connected in series to the pre-resistance,
the control device comprises a pre-charge process executing part that is configured to control the connection of the plural battery modules to the pair of output terminals after the pre-charge process is executed on each one battery module of the plural battery modules one by one, in a situation where the plural battery modules are connected to the load via the pair of output terminals,
the pre-charge process is a process for turning ON the main relay of said one battery module and turning OFF the pre-charge relay when a difference between a main electric voltage having affected between the pair of output terminals and an unit electric voltage of the battery unit of said one battery module is equal to or less than a predetermined threshold after the main relay of said one battery module being a target is turned OFF and the unit relay and the pre-charge relay of said one battery module are turned ON, and
the control device further comprises:
   a time obtaining part that obtains a cooling time T_{C} being an elapsed time since the pre-charge process is previously performed on a previous hierarchy No. 1 battery module on which the pre-charge process is firstly executed when a previous connection to the load is performed; and
   an order deciding part that decides an order of the pre-charge process to inhibit the pre-charge process from being executed firstly on the previous hierarchy No. 1 battery module when a next connection to the load is performed in a situation where the cooling time T_{C} is equal to or less than a predetermined reference time T_{D}.

### Item 2:

The battery system according to item 1, wherein
the control device comprises an unit electric voltage obtaining part that obtains an unit electric voltage being an electric voltage of the battery unit for each of the plural battery modules, and
the order deciding part that arranges the plural battery modules in ascending order or descending order based on plural ones regarding the unit electric voltage obtained by the obtaining part, and brings a battery module different from the previous hierarchy No. 1 battery module up to a battery module on which the pre-charge process is firstly executed when a next connection to the load is performed, in a situation where a No. 1 battery module in the arranged order is the previous hierarchy No. 1 battery module and the cooling time T_{C} is equal to or less than the reference time T_{D}.

### Item 3:

The battery system according to item 1 or 2, wherein
the time obtaining part obtains an elapsed time since latest one of the pre-charge process is firstly executed, for each of the plural battery modules.

### Item 4:

The battery system according to item 3, wherein
the control device executes a predetermined error process when the elapsed time for all of the plural battery modules is equal to or less than the reference time T_{D}.

### Item 5:

The battery system according to item 4, wherein
the error process is a process that prohibits turning ON each of the main relay, the unit relay, and the pre-charge relay.

### Item 6:

The battery system according to item 4, wherein
the error process is a process that prohibits a start of the pre-charge process until the elapsed time of the battery module whose elapsed time is the longest among the plural battery modules exceeds the reference time.

### Item 7:

The battery system according to item 4, wherein
the error process is a process that decides an order of the pre-charge process to perform the pre-charge process firstly on the battery module whose elapsed time is the longest among the plural battery modules when a next connection to the load is performed.

### Item 8:

The battery system according to any one of items 1 to 7, wherein
the order deciding part decides an order from the second onwards for the pre-charge process based on the elapsed time of the plural battery modules.

## Claims

1. A battery system (1), comprising:
a pair of output terminals (5) that are connected to a load (100);
plural battery modules (10) that are connected to the pair of output terminals (5) and arranged in parallel; and
a control device (60), wherein
each of the plural battery modules (10) comprises:
a battery unit (12) that comprises plural single batteries (11) connected in series;
a main relay (20) that is provided on an end part at a first side of the battery unit (12);
an unit relay (30) that is provided on an end part at a second side of the battery unit (12); and
a pre-charge unit (40) that is provided in parallel to the main relay (20),
the pre-charge unit (40) comprises:
a pre-resistance (41); and
a pre-charge relay (42) that is connected in series to the pre-resistance (41),
the control device (60) comprises a pre-charge process executing part (67) that is configured to control the connection of the plural battery modules (10) to the pair of output terminals (5) after the pre-charge process is executed on each one battery module (10) of the plural battery modules (10) one by one, in a situation where the plural battery modules (10) are connected to the load (100) via the pair of output terminals (5),
the pre-charge process is a process for turning ON the main relay (20) of said one battery module (10) and turning OFF the pre-charge relay (42) when a difference between a main electric voltage having affected between the pair of output terminals (5) and an unit electric voltage of the battery unit (12) of said one battery module (10) is equal to or less than a predetermined threshold after the main relay (20) of said one battery module (10) being a target is turned OFF and the unit relay (30) and the pre-charge relay (42) of said one battery module (10) are turned ON, and
the control device (60) further comprises:
a time obtaining part (64) that obtains a cooling time T_{C} being an elapsed time since the pre-charge process is previously performed on a previous hierarchy No. 1 battery module (10) on which the pre-charge process is firstly executed when a previous connection to the load (100) is performed; and
an order deciding part (65) that decides an order of the pre-charge process to inhibit the pre-charge process from being executed firstly on the previous hierarchy No. 1 battery module (10) when a next connection to the load (100) is performed in a situation where the cooling time T_{C} is equal to or less than a predetermined reference time T_{D}.

2. The battery system (1) according to claim 1, wherein
the control device (60) comprises an unit electric voltage obtaining part (63) that obtains an unit electric voltage being an electric voltage of the battery unit (12) for each of the plural battery modules (10), and
the order deciding part (65) that arranges the plural battery modules (10) in ascending order or descending order based on plural ones regarding the unit electric voltage obtained by the obtaining part, and brings a battery module (10) different from the previous hierarchy No. 1 battery module (10) up to a battery module (10) on which the pre-charge process is firstly executed when a next connection to the load (100) is performed, in a situation where a No. 1 battery module (10) in the arranged order is the previous hierarchy No. 1 battery module (10) and the cooling time T_{C} is equal to or less than the reference time T_{D}.

3. The battery system (1) according to claim 1 or 2, wherein
the time obtaining part (64) obtains an elapsed time since latest one of the pre-charge process is firstly executed, for each of the plural battery modules (10).

4. The battery system (1) according to claim 3, wherein
the control device (60) executes a predetermined error process when the elapsed time for all of the plural battery modules (10) is equal to or less than the reference time T_{D}.

5. The battery system (1) according to claim 4, wherein
the error process is a process that prohibits turning ON each of the main relay (20), the unit relay (30), and the pre-charge relay (42).

6. The battery system (1) according to claim 4, wherein
the error process is a process that prohibits a start of the pre-charge process until the elapsed time of the battery module (10) whose elapsed time is the longest among the plural battery modules (10) exceeds the reference time.

7. The battery system (1) according to claim 4, wherein
the error process is a process that decides an order of the pre-charge process to perform the pre-charge process firstly on the battery module (10) whose elapsed time is the longest among the plural battery modules (10) when a next connection to the load (100) is performed.

8. The battery system (1) according to any one of claims 1 to 7, wherein
the order deciding part (65) decides an order from the second onwards for the pre-charge process based on the elapsed time of the plural battery modules (10).
